# EUROPEAN PATENT SPECIFICATION

(11) **EP 0 565 288 B1**
(45) Date of publication and mention of the grant of the patent: **03.01.2001**
(21) Application number: 93302394.7
(22) Date of filing: 26.03.1993
(51) Int. Cl.: A01N 59/12

(54) **Production of iodophors**
Herstellung von Iodophoren
Production d'iodophores

(30) Priority: 27.03.1992 GB 9206771; 31.07.1992 GB 9216378
(43) Date of publication of application: 13.10.1993
(73) Proprietor: UNILEVER N.V., 3133 AT Vlaardingen (NL); UNILEVER PLC, London EC4P 4BQ (GB)
(72) Inventor: Corby, Michael P., Ravenshead, Nottinghamshire (GB)
(74) Representative: Rosen Jacobson, Frans Lucas M.

(56) References cited:
- WO-A-89/00006
- GB-A- 293 504
- US-A- 4 113 857
- US-A- 4 271 149
- CHEMICAL ABSTRACTS, vol. 9, no. 8, 20 April 1915, Columbus, Ohio, US; A.SKRABAL: 'Hypohalous acids and hypohalites. VIII. The temperature coefficients of the reciprocal reactions of the iodine-iodate equilibrium' page 996-997 ;
- CHEMICAL ABSTRACTS, vol. 16, no. 18, 20 September 1922, Columbus, Ohio, US; O.LIEVIN 'Kinetic study of alkaline solutions of iodine' page 3022-23 ;
- CHEMICAL ABSTRACTS, vol. 6, no. 1, 10 January 1912, Columbus, Ohio, US; A.SKRABAL 'The Calculation of Chemical Equilibrium from Measurements of Reaction Velocity' page 12-13 ;

## Description

This invention relates to the production of iodophors; more particularly, it relates to a process for the preparation of iodophor solutions, which avoids the need for complex concentrate preparation and allows formulations to be prepared direct in one mixing operation.

According to the Merck Index, the term "iodophor" may be applied to any product in which surface-active agents act as carriers and solubilizing agents for iodine, but it is not so-limited as some non-surface-active agents, such as polyvinylpyrrolidone, PVP, may also act as such carriers and solubilizing agents. The chemistry thereof is complex. The need for iodophors arises from the inherent lack of water-solubility of the iodine molecule. Iodine, being a general protoplasmic poison, is a valuable and desirable biocide. It is therefore important that solutions of iodine may be presented to end-users in a state where concentrations make the exercise economic, this being well above the level of normal solubility in water. Tinctures of iodine may be prepared where the iodine is solubilized using halide salts and/or organic solvents. Such solutions generally have several disadvantages. Cost tends to be high and solvents may be flammable, also the iodine is present in its normal molecular state and tends to be aggressive, this manifests itself as high vapour iodine concentrations causing user hazard and pack-staining problems and as pain when used as a skin disinfectant or corrosivity on surfaces. Such solutions are, however, highly efficacious.

At least since the 1920's, it has been known that iodine may be reacted with certain materials such that only a loose association is formed, (see, for example, US-A-2,706,701, US-A-2,739,922, US-A-3,028,299, US-A-3,028,300 and US-A-4,271,149). Iodine has also been prepared in colloidal form as disclosed in GB-A-293,504, wherein crystalline iodine is subjected to the action of an alkali hydroxide solution until the iodine is dissolved. The solution is then cooled, protective colloid added, and then strong acid rapidly added to precipitate the colloidal iodine.

There is postulated a dynamic equilibrium as follows:

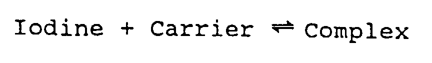

The complex of iodine and carrier has different properties to both the starting entities and is thus a true chemical compound rather than a solution of iodine in carrier. It is postulated that the dynamic equilibrium is rapid and that the free iodine is the true biocide present. It is possible to formulate complexes which contain mostly complex and little free iodine and it is possible to formulate complexes that are mostly free iodine and little complex, i.e:

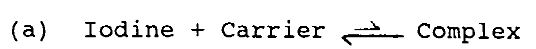

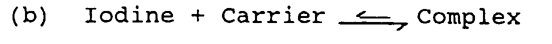

If both of the above situations are examined chemically, for instance by thiosulphate iodine titration, both will seem to react quickly. However, differences do exist. Situation (a) will approximate to a tincture of iodine with problems as discussed above and situation (b) will tend to a non-viable biocidal system due to the low - zero levels of the true biocidal entity, the free iodine. The art in preparing such formulations is to establish a viable balance.

In order to produce such solutions, the current practice involves the reaction of iodine with the carrier or a solution of iodine (as a tincture) with the carrier giving a concentrate for subsequent dilution into formulations to iodine concentrations of end-user value. Typically, such a complex or premix would be prepared by reacting 25% of elemental iodine with 75% of an alcohol ethoxylate or alkyl phenol ethoxylate to form a viscous dark brown compound containing approximately 20% titratable iodine. These complexes or premixes are then used in formulations such that titratable iodine levels of from 0.1 to 2.5% w/w are found, i.e. from 0.5 to 12.5% w/w added. Normally, but with some exceptions, such complexes need to be solubilized with the addition to formulations of either more or different surface-active agents or hydrotropes or organic solvents or halide salts or mixtures thereof, to produce clear dark brown solutions. For example WO-A-89/00006 discloses a process of making a stable iodophor composition in which the stability of the iodophor composition is increased when the amount of carrier is decreased. This iodophor is formed by liberating iodine from an iodine liberating substance by an oxidizing agent in the presence of an organic iodine solubilizing compound.

Having to prepare these compounds, i.e. complexes, and subsequently to dilute them is both time-consuming and expensive. Ideally, the formulation should be prepared from all the ingredients in water solution with the elemental iodine added and stirred until dissolved. This, however, is not feasible for several reasons. Commercially-available elemental iodine is in the form of sublimated crystals of varying size. It may be possible to design a formulation where such elemental iodine crystals would be soluble, but, at such low dilutions, solubilization is exceedingly slow to the point of infinity. It is also postulated that the carrier molecule needs to be in a substantially water-free state in order that the true iodine carrier complex may form properly, therefore concentrates must perforce be prepared if formulations are subsequently to have the desirable properties mentioned above. The preparation of concentrated complexes and the dilution to useful active iodine levels has therefore become common practice and may be considered to be the usual state of the art.

An advantageous method of preparing iodophor solutions has now been devised which avoids the need for complex concentrate preparation and allows formulations to be prepared direct in one mixing operation. It has now surprisingly been found that formulations prepared in this way do generally exhibit the desirable properties of a well-formulated complexed iodine and indeed are sometimes superior in this respect to a formulation equivalent prepared in the standard complex/premix way.

This invention relates to a process for the production of an iodophor which comprises dissolving iodine in an alkaline medium and then acidifying the solution in the presence of an organic carrier, the process being characterised in that (a) on acidification a minimum pH is reached which is above pH 4 and never drops below pH 4, and (b) the final pH is less than 5.0.

The acidification of the solution may comprise the addition of sulphuric, phosphoric, hydrochloric or sulphamic acid or an alkali metal hydrogen sulphate. Suitable carriers include polyvinylpyrrolidone, alcohol ethoxylates or alkyl phenol ethoxylates. Only a proportion of the total original iodine concentration is generated and the remainder is present as iodide and iodate. For the process of the invention, the minimum pH reached on acidification is above pH 4, and the pH never falls below that value. Also, the pH may be raised slightly following acidification.

Having outlined the present invention, it will now be described in more detail.

Iodine is rapidly soluble in an alkaline medium and dissociates into iodide and iodate ions:

(1) 3I₂ + 6(OH)⁻ → 5I⁻ + IO₃ ⁻ + 3H₂O

(2) 5I⁻ + IO₃ ⁻ + 6H⁺ → 3I₂ + 3H₂O

and is rapid in both directions at extreme pHs. Normally, the iodine precipitated by the addition of acid in reaction (2) will be crystalline and will appear similar to the starting raw material. However, at the point of formation of the elemental iodine in reaction (2), there is a moment where the element must be present either as a free radical or as monatomic iodine or at least as the element in a highly reactive state and not in its crystalline state. It has been found that, if a suitable carrier is present at this moment of iodine formation, the iodine crystals do not form, a complex forms instead and the formulation may be prepared directly in a substantially normal state. This single stage mixing process obviously has commercial advantages in terms of cost saving.

The presently-produced products exhibit full biocidal activity, but may be distinguished by chemical analysis. As indicated above, suitable carriers include polyvinylpyrrolidone, alcohol ethoxylates, alkyl phenol ethyoxylates and polyethyl glycols, linear alcohol ethoxylates being preferred in some instances. Preferably, caustic soda is used to give a pH of at least 12.0 and a mineral acid, such as hydrochloric or sulphuric, is used to reduce the pH.

The following examples do not represent embodiments of the invention. They use a process which involves dissolving elemental iodine at a pH of greater than 7.0 and, in the presence of a suitable carrier, and adjusting the pH to below 4.0.

It may be noted that in no case was it necessary to prepare an iodine carrier complex premix.

| Example 1 | % w/w |
|---|---|
| Water | QS |
| Polyvinyl pyrrolidone K30 | 2.0 |
| Iodine | 0.5 |
| Caustic soda (48% solution) | 1.0 |
| Sulphuric acid | to pH 3.5 |

A substantial part of the water (approx 40%) was used to dissolve the iodine in the caustic soda by mixing. This took approximately 10 minutes. The polyvinyl pyrrolidone (PVP) was added, optionally with more water, and mixed. The pH of this water-white to slightly yellow coloured mixture was 12/13. The sulphuric acid was added until the pH reached the desired level, 3.5. The sulphuric addition was calculated and the remainder of the water was added to 100% w/w. The resulting solution had a similar appearance to a preparation made using an iodophor complex of PVP commercially available and known as "Povidone".

The formulations of the next three Examples may be prepared in a similar way:

| Example 2 | % w/w |
|---|---|
| Water | QS |
| Iodine | 0.6 |
| Caustic soda (48%) | 1.0 |
| Synperonic A9 (linear alcohol ethoxylate) | 5.0 |
| Sulphuric acid | to pH 3.5 |

| Example 3 | % w/w |
|---|---|
| Water | QS |
| Iodine | 1.0 |
| Caustic soda | 2.0 |
| Ethylan BCP (alkyl phenol ethoxylate) | 7.0 |
| Sulphuric acid | to pH 3.5 |

| Example 4 | % w/w |
|---|---|
| Water | QS |
| Iodine | 0.1 |
| Caustic soda (48%) | 0.2 |
| Lutensol TO8 (linear alcohol ethoxylate) | 1.0 |
| Phosphoric acid | to pH 3.5 |

The next formulation may also be prepared in a similar way, but, with the final addition of glycerine, provides an example of a teat dip used commercially post-milking to disinfect cows' teats as a protection against mastitis.

| Example 5 | % w/w |
|---|---|
| Water | QS |
| Iodine | 0.6 |
| Caustic soda (48%) | 0.5 |
| Lutensol TO8 | 4.5 |
| Glycerine | 10.0 |
| Sulphuric acid | to pH 3.5 |

The process provides a further advantage. When iodophor complexes are prepared, it is normally accepted that a significant proportion of the iodine will react permanently with the carrier molecule. For example, in the case of an addition of 25% of elemental iodine, say, 20% would be titratable. There have been several suggestions as to how this permanent loss of a valuable resource may be minimized, (see, for example, GB 1,475,695). However, a loss of 5-10% of the original iodine has been regarded as unavoidable; 95% return of available iodine being considered state of the art.

The process provides the possibility of returning all of the iodine used in the formulations, as well as exhibiting the usual degree of chemical stability.

In the following Example 6, a comparison of (a) a prior art preparation and (b) an iodophor produced according to the above mentioned process evidences this phenomenon:

### Example 6

(a) A complex (A) was first prepared by stirring and heating Lutensol TO8 (87.0% w/w) and crude iodine (13% w/w), until the iodine was fully dissolved. Reaction with thiosulphate in acid solution indicates that 11.4 % of iodine is titratable.
This material was then formulated:

| | % w/w |
|---|---|
| Water | QS |
| Complex (A) | 4.6 |
| Glycerine | 10.0 |
| Sulphuric acid | to pH 3.5 |

(b) The following formulation was prepared in accordance with the process:

| | |
|---|---|
| Water | QS |
| Iodine | 0.6 |
| Caustic soda (48%) | 1.0 |
| Lutensol TO8 | 4.0 |
| Sulphuric acid | to pH 3.5 |
| Glycerine | 10.0 |

The former formulation titrates as 0.51% available iodine at pH 3, while the latter titrates as 0.6% available iodine at pH 3.

By way of further illustration, other solubilizing systems may be employed (Example 7), and anionic surfactants may also be used (Example 8):

| Example 7 | % w/w |
|---|---|
| Water | QS |
| NaOH (48%) | 0.5 |
| I₂ | 0.6 |
| Lutensol TO8 | 2.5 |
| Imsol A (85% Isopropanol) | 2.5 |
| Sulphuric acid | to pH 3.5 |

| Example 8 | % w/w |
|---|---|
| Water | QS |
| NaOH (48%) | 0.5 |
| I₂ | 0.6 |
| Lignosulphonate | 5.0 |
| Hydrochloric acid | to pH 3.5 |

Further advantages may be gained by adjusting the pH of the mix to a low level to generate all possible iodine and then back-neutralising a buffering agent or a neutralising agent. As the dissociation reaction is slow at pH 4, the following is possible.

| Example 10 | % w/w |
|---|---|
| Water | 40.0 |
| Caustic soda (48%) | 0.55 |
| Iodine | 0.55 |
| | |
| Dissolve and add: | |
| Lutensol TO8 | 3.5 |
| Isopropanol (85%) | 1.0 |
| | |
| Add: | |
| Sulphuric to pH 2 | Hold for 30 minutes |
| | |
| Add: | |
| Sodium acetate to pH 4 | |
| | |
| Add: | |
| Glycerine | 10.0 |
| Water | QS |

This results in an apparently normal iodophor. When the pH of the reaction mix has been lowered to pH 2.0 or less, then raised again to a higher pH, the resultant product appears substantially the same as products made by the conventional complex/premix process. It is likely, however, that alkali metal ion content or materials used to dissolve the iodine in the first instance are atypically present.
Available iodine at pH 3.5 = 0.54% w/w
and after 1 month = 0.51% w/w

Bacteriological results from Example 5:

| Suspension test to BS 3286 | |
|---|---|
| Contact time | various |
| Temperature | ambient |
| Concentration | Neat |
| Soil level | Nil |

| Control Count | Organism | Contact min | % Kill |
|---|---|---|---|
| 4.9 x 10⁷ | E. coli 9517 | 1/4 | >99.9999 |
| | | 1 | >99.9999 |
| | | 10 | >99.9999 |
| 2.1 x 10⁷ | E. coli 2070 | 1/4 | 99.998 |
| | | 1 | >99.9999 |
| 4.2 x 10⁷ | S. aureus 9518 | 1/4 | >99.9998 |
| | | 1 | >99.9998 |
| | | 10 | >99.9998 |
| 1.3 x 10⁷ | S. aureus 1499 | 1/4 | >99.9992 |
| | | 1 | >99.9992 |

Surface disinfection test.

National Mastitis Council Inc Protocol A test on Example 5 (neat).

| S. aureus NCFB 1499 | |
|---|---|
| Log Control count | 6.10 |
| Log test count | 0.76 |
| Log reduction | 5.34 |

| E. coli NCFB 2070 | |
|---|---|
| Log Control count | 6.64 |
| Log test count | 1.05 |
| Log reduction | 5.59 |

The formulation shows the full normal biocidal activity.

With reference to the accompanying illustrative diagram, further interesting and valuable effects may be noted using the akaline/acid production of iodophors. These effects are at the basis of the present invention.

Iodine is added (x%) to the alkaline mix and dissociates totally to iodide and iodate Point (A).

On acidification, a little iodine is generated, but not until acidic pH is reached does a substantial level of actual iodine become evident (Point (B) and below).

If the pH is now decreased by acid addition to pH 2 or below all x% of the iodine is generated (Point (D)). Back-neutralisation to Points (E) and (F) does not significantly affect the iodine level until alkaline pH is reached, when the iodine again dissociates into iodide and iodate.

The situation of the present invention, however, offers substantial advantage. As on acidification, a minimum pH is reached which is above pH 4, only a porportion of x% of the original iodine is developed, the remainder still being in solution as iodide and iodate. The reaction stops or an equilibrium is reached at this percentage, i.e. typically at pH 4 only 70% of x is generated. As the pH never drops below 4 (Point (C)), the amount of surfactant or carrier entity needed for solubility is proportionally reduced. This has the obvious effect of lower formulation cost, but also may well result in better skin compatibility for the final product.

Another effect is also seen. If a product is produced by partial acidification at Point (C) and optionally the pH is increased slightly to Point (G), the formulation is stable and homogeneous. Upon titration with thiosulphate in the presence of buffer pH 4 to 4.5, the immediate titration results in the stated 70% of x. However, when the iodine is removed by the titration, there follows a slow regeneration of iodine from the remaining iodide and iodate which eventually returns the full amount of x.

The time for full generation of x is pH-dependent, the lower the pH the faster is this subsequent iodine generation.

One implication of this regeneration is the provision of a slow-release iodine biocidal system, resulting in longer protection of the teat skin if used as a teat dip, for example.

Currently, iodophors on cows' teats may be shown to remain biocidal for about 1-2 hours. Between-milking protection is seen as highly desirable and a judicious choice of product pH may well achieve this worthwhile goal.

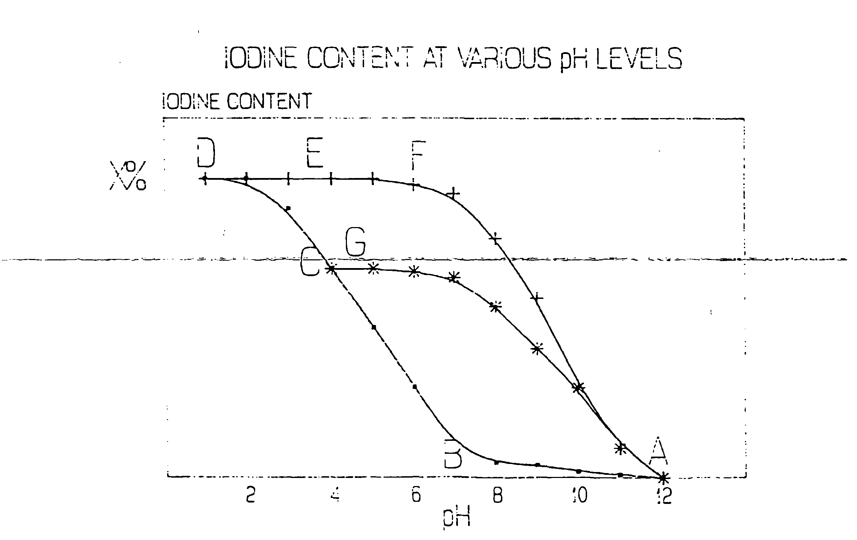

## Claims

1. A process for the production of an iodophor, comprising dissolving iodine in an alkaline medium and then acidifying the solution in the presence of an organic carrier, the process being characterised in that (a) on acidification a minimum pH is reached which is above pH 4 and never drops below pH 4, and (b) the final pH is less than 5.0.

2. A process as claimed in claim 1, wherein the acidification comprises the addition to the said solution of sulphuric, phosphoric, hydrochloric or sulphamic acid or an alkali metal hydrogen sulphate.

3. A process as claimed in claim 1 or claim 2, wherein the carrier is selected from polyvinylpyrrolidone, alcohol ethoxylates or alkyl phenyl ethoxylates.

4. A process as claimed in any of claims 1-3, wherein the pH is raised slightly following acidification.

## Patentansprüche

1. Verfahren zur Herstellung eines Jodophors, umfassend Auflösen von Jod in einem alkalischen Medium und anschließend Ansäuerung der Lösung in Gegenwart eines organischen Trägers, wobei das Verfahren dadurch gekennzeichnet ist, daß (a) nach der Ansäuerung ein minimaler pH-Wert erreicht wird, der oberhalb pH 4 liegt und niemals unter pH 4 fällt und (b) der End- pH-Wert weniger als 5,0 ist.

2. Verfahren nach Anspruch 1, wobei die Ansäuerung die Zugabe von Schwefel-, Phosphor-, Chlorwasserstoff- oder Sulfaminsäure oder einem Alkalimetallhydrogensulfat zu der Lösung umfaßt.

3. Verfahren nach Anspruch 1 oder Anspruch 2, wobei der Träger ausgewählt ist aus Polyvinylpyrrolidon, Alkoholethoxylaten oder Alkylphenylethoxylaten.

4. Verfahren nach einem der Ansprüche 1 bis 3, wobei der pH-Wert nach der Ansäuerung etwas angehoben wird.

## Revendications

1. Procédé pour la production d'un iodophore, comprenant la dissolution d'iode dans un milieu alcalin, puis l'acidification de la solution en présence d'un véhicule organique, le procédé se caractérisant en ce que (a) on atteint par acidification un pH minimal qui est supérieur à pH 4 et ne chute jamais en dessous de pH 4, et (b) le pH final est inférieur à 5,0.

2. Procédé selon la revendication 1, dans lequel l'acidification comprend l'addition à ladite solution d'acide sulfurique, phosphorique, chlorhydrique ou sulfamique ou d'un hydrogénosulfate de métal alcalin.

3. Procédé selon la revendication 1 ou la revendication 2, dans lequel le véhicule est choisi parmi la polyvinylpyrrolidone, des éthoxylates d'alcool ou des éthoxylates d'alkylphényle.

4. Procédé selon l'une quelconque des revendications 1-3, dans lequel on augmente lentement le pH après acidification.
